# NEW EUROPEAN PATENT SPECIFICATION

(11) **EP 0 774 204 B2**
(45) Date of publication and mention of the opposition decision: **16.01.2013**
(45) Mention of the grant of the patent: 03.04.2002
(21) Application number: 96203152.2
(22) Date of filing: 08.11.1996
(51) Int. Cl.: A01J 5/017

(54) **A construction including an implement for milking animals**
Konstruktion mit Vorrichtung zum Melken von Tieren
Construction comprenant un dispositif de traite d'animaux

(30) Priority: 14.11.1995 NL 1001645
(43) Date of publication of application: 21.05.1997
(73) Proprietor: MAASLAND N.V., 3155 PD Maasland (NL)
(72) Inventor: Van der Lely, Cornelis, 6300 Zug (CH)
(74) Representative: Corten, Maurice Jean F.M.

(56) References cited:
- EP-A- 0 566 201
- EP-A- 0 640 282
- EP-A1- 0 551 957
- EP-A2- 0 091 892
- EP-A2- 0 545 916
- EP-A2- 0 565 189
- EP-A2- 0 566 201
- WO-A1-85/02973
- GB-A- 2 226 941
- GB-A- 2 258 382
- SU-A1- 559 682
- SU-A1- 641 931
- SU-A1- 1 507 267

## Description

The invention relates to a construction for milking animals according to the preamble of claim 1.

Such a construction is known, for example from EP-A-0 566 201.

The present invention aims at obtaining a construction of the above-mentioned type, whereby the teat cups can be connected quickly and efficiently to the teats of an animal to be milked.

The invention relates to a construction including an implement for milking animals, of the sort as defined above, wherein in the inoperative position each teat cup forms an angle with a vertical line extending perpendicular on the horizontal floor, and in that the carrier comprises four units each carrying a teat cup, while the units are provided with means, by means of which the units are pivotable independently of each other about a horizontal pivot shaft. This enables to connect the teat cups both individually and simultaneously to the teats of an animal, respectively to disconnect same therefrom.

In order to realize that the teat cup is put on the carrier in a stable position, according to a further inventive feature, the carrier comprises a conical seat, while the bottom side of the teat cup is also conical, such that the upper side of the conical part of the teat cup has a larger diameter than that of the teat cup near the bottom side thereof.

In accordance with a further inventive feature, the units comprise a boxlike housing, in which a milk tube for the discharge of milk, together with a pulsation tube for the pulsation of the underpressure, is disposed so as to be protected therein. According to again an other inventive feature, the milk tubes and pulsation tubes are arranged in an approximately circular loop in the boxlike housings so as to be protected therein. By means of this circular loop there is created extra tube length, which enables to space the teat cups apart from the carrier. In order to maintain the teat cups in the substantially vertical position during connecting or disconnecting, during milking, as well as in their inoperative position on the carrier, in accordance with a further inventive feature, the milk tubes and pulsation tubes extend from a teat cup over a first part in an approximately vertical plane, while they are juxtaposed over a second part. According to a further inventive feature, the second part relates to the loop-shaped part of the tubes. Due to the fact that the second part is loop-shaped and the tubes are juxtaposed, the latter part of the tubes is relatively flexible and the teat cups can be moved upwards without meeting with too much bending strength. In order to maintain the teat cups in their substantially vertical position and to allow the teat cups to be moved upwards smoothly, in accordance with a further inventive feature, the first part of the tubes is made of a relatively rigid material and the second part of the tubes is made of a relatively flexible material. According to a further inventive feature, for the purpose of realizing that the first part of the tubes merges smoothly into the second part thereof, the first and second part of the tubes are interconnected by means of a coupling block. Thereby, in accordance with a further inventive feature, the tube connections are superposed at one side of the coupling block and are juxtaposed at the other side thereof. In order still further to reinforce the construction, according to again an other inventive feature, the jackets of the milk tubes and pulsation tubes are fixed to each other.

In order to bring the teat cups back to their inoperative position, in accordance with a further inventive feature, the implement is provided with withdrawing members, by means of which the teat cups can be drawn towards the carrier. According to a further inventive feature, the withdrawing member includes a flexible element, such as a cord, connected with one end with a teat cup and with the other end with a withdrawing element, such as a cylinder. In this manner, by activating withdrawing members, the teat cups can be drawn into the conical seats on the units.

In accordance with an other inventive aspect, the construction includes a collecting member for collecting dung, in which there are integrated means for pushing an animal's tail aside. Therefore, the invention also relates to a construction including an implement for milking animals, provided with one or more milking robots, one or more teat cups and one or more milk boxes, characterized in that the construction includes a collecting member for collecting dung, in which there are integrated means for pushing an animal's tail aside. In this manner the milk box is prevented from being fouled, so that milking can be effected in a very hygienic manner. According to a further inventive feature, the collecting member comprises a gutterlike housing pivotable in the longitudinal direction of the milk box. In this manner, when entering the milk box, the animal can pivot away the collecting member, after which, once the animal has entered the milk box, the collecting member is pivoted against the rear side of the animal. When the animal moves in the longitudinal direction of the milk box, the collecting member will move together with the animal. According to a further aspect of the invention, the collecting member is also pivotable transversely to the longitudinal direction of the milk box. According to again an other inventive feature, the collecting member is arranged substantially vertically and the gutterlike housing comprises a bottom extending obliquely downwards from the cow. In order to be able to discharge the dung collected by the collecting member, in accordance with a further inventive feature, the gutterlike housing debouches over a dung discharge gutter. According to an inventive feature, the gutterlike housing of the collecting member, seen in rear view, has the shape of an approximately rightangled triangle. In accordance with a further inventive feature, seen in rear view, a first side of the gutterlike housing comprises a plate-shaped side wall including an angle of approximately 140° with the horizontal line, and the further side includes an angle of approximately 90° with the first side. In order to ensure that the tail, after having been pushed aside by the collecting member, will be comfortably positioned, according to a further inventive feature, the plate-shaped side wall of the further side comprises, near its upper end, a bent part including an angle of approximately 30° with the other plate-shaped part thereof.

In order to allow the milking robot to track possible lateral movements of the animal in the milk box, in accordance with a further inventive feature, the collecting member comprises a cow tracking device, by means of which the milking robot can be post-controlled when the animal moves in the longitudinal direction of the milk box.

For a better understanding of the invention and to show how the same may be carried into effect, reference will now be made, by way of example, to the accompanying drawings, in which:
Figure 1 shows in plan view an implement for milking animals, provided with a milk box, a milking robot and a collecting member for the dung;
Figure 2 is a side view of the implement shown in Figure 1;
Figure 3 is a rear view of the implement shown in Figures 1 and 2;
Figure 4 shows a detail of a milking robot according to Figure 1;
Figure 5 is a cross-sectional view of the robot arm taken on the line V - V in Figure 4, and
Figure 6 is a cross-sectional view of the robot arm according to the line VI - VI in Figure 4.

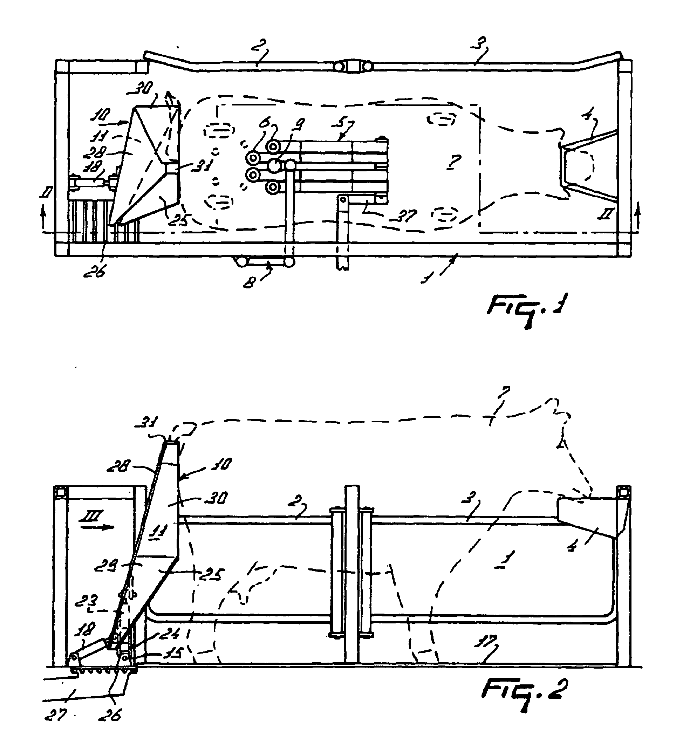

Figure 1 shows in plan view an implement for milking animals, including a milk box 1 provided with an entrance door 2, an exit door 3 and a feed trough 4. At the opposite sides of the entrance door 2 and the exit door 3, beside the fencing of the milk box 1, there is arranged a milking robot 5, by means of which teat cups 6 can automatically be connected to the teats of an animal 7, respectively be disconnected therefrom.

As shown in Figure 1, beside the milking robot 5 there is further arranged a second robot arm 8 provided at its end with a detector 9, by means of which the position of the teats of an animal to be milked can be determined. In the present embodiment, the detector 9 is designed as a laser making a scanning movement in a horizontal plane. Of course it is also possible to apply an other type of detector, such as an ultrasonographic sensor. The milking robot 5 and the second robot arm 8 can be active independently of each other.

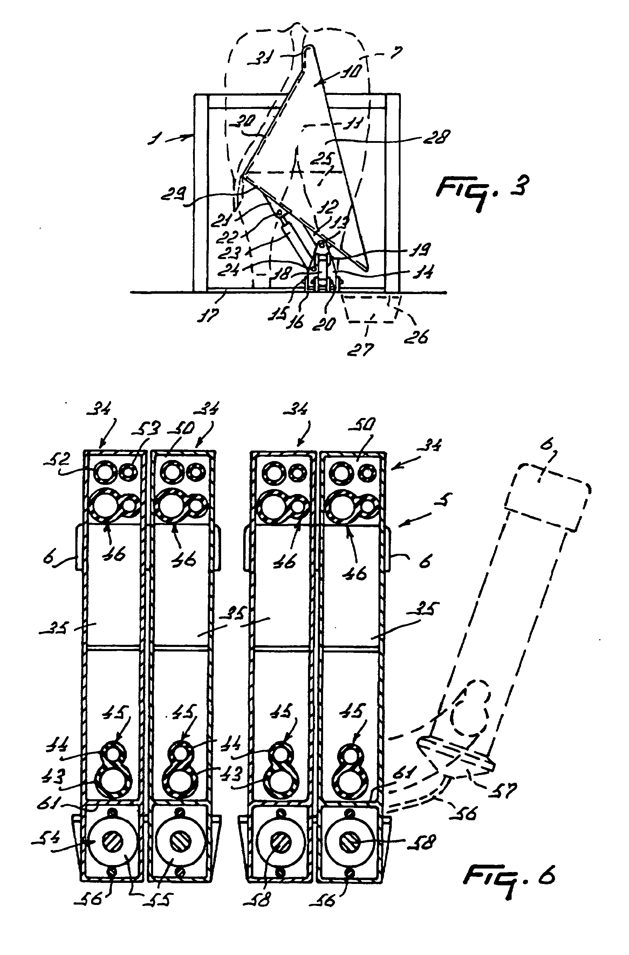

Near the rear side of the milk box 1 there is further disposed a collecting member 10 for collecting the dung of the animal 7 (Figure 3). The collecting member 10 comprises a gutterlike housing 11 which, near its lower side, is provided with a lug 12 which is pivotably connected about a horizontal shaft 13 with a second lug 14. Thereby the first horizontal shaft 13 extends in the longitudinal direction of the milk box 1. The second lug 14 is further pivotable about a second horizontal shaft 15, which is disposed in a U-shaped profile 16 transversely to the longitudinal direction of the milk box 1. The U-shaped profile 16 is fastened on the floor 17 of the milk box 1. Between the floor 17 and the second lug 14 there is further disposed a first cylinder 18 extending in the longitudinal direction of the milk box 1. One end of the first cylinder 18 is pivotably connected with the second lug 14 about a third horizontal shaft 19 and the other end thereof is pivotably connected with the floor 17 about a fourth horizontal shaft 20. The third horizontal shaft 19 and the fourth horizontal shaft 20 both extend transversely to the longitudinal direction of the milk box 1 and are both disposed in U-shaped profiles.

To the gutterlike housing 11 there is fitted a third lug 21 to which, pivotably about a fifth horizontal shaft 22 extending in the longitudinal direction of the milk box 1, there is attached a second cylinder 23. With its other end, the second cylinder 23 is connected, pivotably about a sixth horizontal shaft 24, also extending in the longitudinal direction of the milk box 1, with the second lug 14.

By means of the first cylinder 18, the collecting member 10 can be pivoted about the second horizontal shaft 15 in the longitudinal direction of the milk box 1 and, by means of the second cylinder 23, the collecting member 10 can be pivoted about the first horizontal shaft 13 in the transverse direction of the milk box 1.

The gutterlike housing 11 comprises a triangular bottom 25 made of a plate, one point of which extends obliquely downwards from the cow. Thereby said point of the triangular bottom 25 debouches over a grid floor 26 provided in the right rear angle of the milk box 1. Under the grid floor 26 there is located a dung discharge gutter 27 connected to a (non-shown) dung cellar. The horizontally extending upper edge of the triangular bottom 25 extends transversely to the milk box 1 and is situated at a height of approximately 1.25 m. The gutterlike housing 11 furthermore comprises, seen in rear view, a quadrangular back wall 28 made of a plate. Seen in rear view, the first side 29 of the back wall 28 includes an angle of approximately 140° with the horizontal line and the further side 30 includes an angle of approximately 90° with the first side 29. The further side 30 comprises near its upper end a bent part 31 including an angle of approximately 30° with the other part of the further side 30.

The collecting member 10 is additionally provided with a (non-shown) cow tracking device, by means of which the milking robot 5 can be post-controlled when the animal 7 moves in the longitudinal direction of the milk box 1.

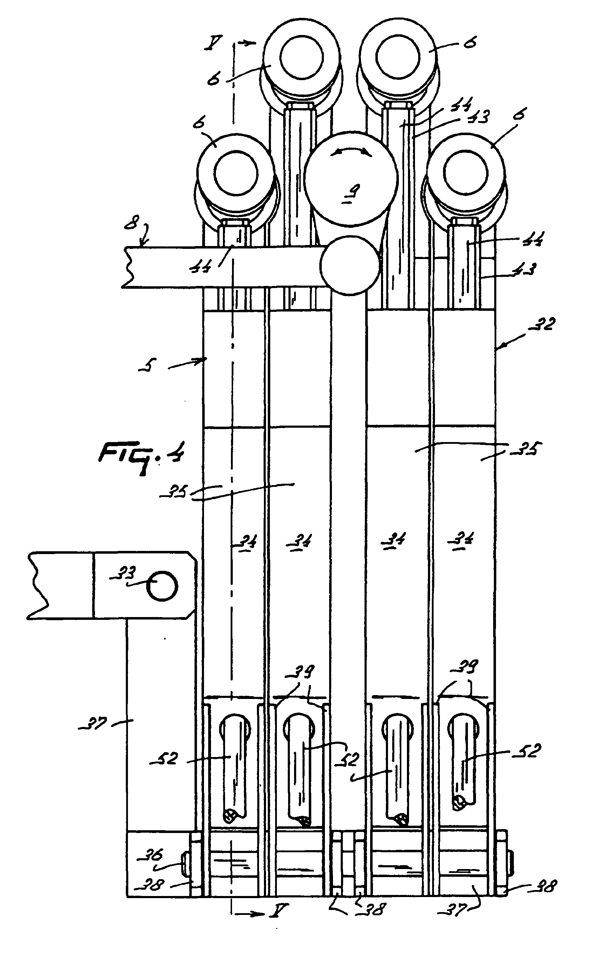

In Figures 4 to 6, the end of the milking robot 5 is shown in detail. The teat cups 6 rest on a carrier 32 which is pivotable about a vertical shaft 33. The carrier 32 comprises four juxtaposed units 34 each carrying near an end a teat cup 6. The units 34 each comprise a boxlike housing 35, which is pivotable about a horizontal shaft 36. By means of two juxtaposed U-profiles 38, the horizontal shaft 36 is disposed on an L-shaped box girder 37 of the milking robot 5. The unit 35 is provided with two lugs 39 which are pivotably disposed about the horizontal shaft 36. Each of the units 34 is individually pivotable about the horizontal shaft 36 by means of a cylinder 40. The cylinder 40 is connected with one end, by means of lugs 41, with the L-shaped box girder 37 and, with the other end, by means of lugs 42, with the boxlike housing 35. The cylinder 40 may also be designed as a step motor.

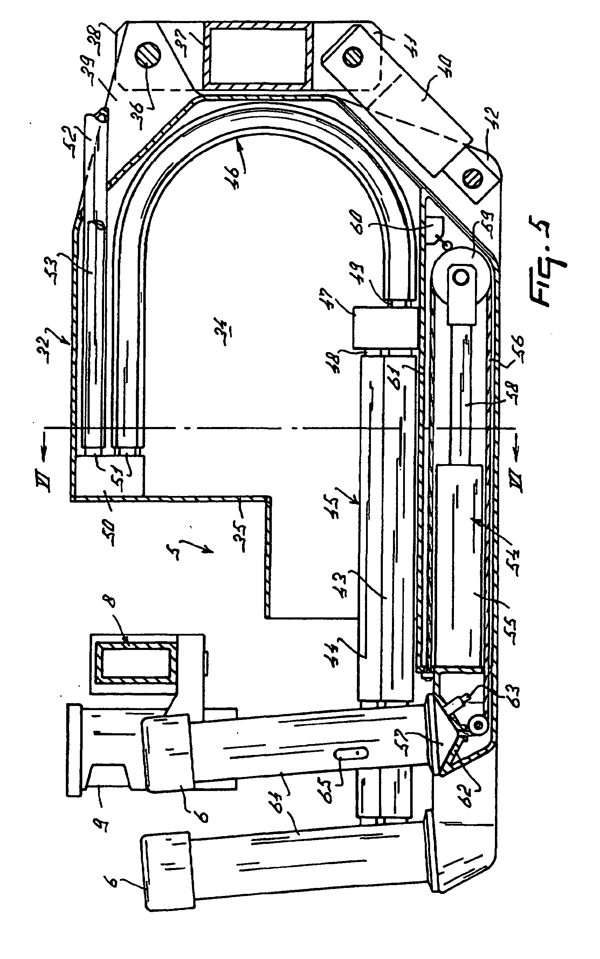

In the boxlike housings 35 the milk tubes 43 and the pulsation tubes 44 of the teat cups 6 are accommodated. When the teat cups 6 rest on the carrier 32, the milk tubes and pulsation tubes 43, 44 are located approximately in a circular loop in the boxlike housings 35 (Figure 5). A first part 45 of the milk tubes and pulsation tubes 43, 44 extends from a teat cup 6 in a vertical plane and a second part 46 of the tubes comprises a loop-shaped part 46 located in the vertical plane. The first and second part 45, 46 respectively of the tubes 43, 44 are connected to each other by means of a coupling block 47. The first part 45 of the tubes is connected to connecting nipples 48, which are arranged one below the other at one side of the coupling block 47, whereas the second part 46 of the tubes is connected to connecting nipples 49, which are disposed next to each other at the other side of the coupling block 47. By means of the coupling block 47, there is obtained a kink-free connection between the first part 45, where the tubes are located above each other, and the second part 46, where the tubes are located next to each other. Both in the first and second part 45, 46 of the tubes the jackets of the milk tubes and pulsation tubes 43, 44 are interconnected. Furthermore, the jacket of the first part 45 of the tubes is made of a relatively rigid material, so that the teat cup 6 is prevented from falling down too easily. On the other hand, the second part 46 of the tubes 43, 44 is made of a relatively flexible material. As a result, the units 34, without meeting with too much resistance of the tubes 43, 44, can be moved upwards without kinks being produced. The other end of the second part 46 of the tubes is connected with a second coupling block 50, which is provided with two pairs of superposed connecting nipples 51, to which, on the one hand, the end of the second part 46 of the tubes is connected and, on the other hand, a pipelike milk line 52 and a pipelike pulsation line 53 are connected (Figures 5, 6). By means of the second coupling block 50, disposed in the left upper part of the boxlike housing 35, there is obtained a diversion of 180° for the milk-pulsation tube 43, 44. Like the second part 46 of the tubes, the pipelike milk line and the pipelike pulsation line 53 are situated next to each other.

In the lower side of each boxlike housing 35 there is moreover disposed a withdrawing member 54, by means of which the teat cups 6 can be withdrawn towards the carrier 32. The withdrawing member 54 comprises a cylinder 55, arranged in the lower part of the boxlike housing 35. The withdrawing member 54 is additionally provided with a cord 56 which is connected with one end with the boxlike housing 35 and with the other end with a conical bottom side 57 of the teat cup 6. The cord 56 is further guided over a wheel 59 that is rotatably disposed at the end of the piston rod 58 of the cylinder 55. In the situation shown in Figure 5, the piston rod 58 is entirely pulled out, whereby the wheel 59 touches a sensor 60, designed as a switch, which is disposed against a wall 61 of the boxlike housing 35. By means of the switch 60 there can be recorded whether the cord 56 is entirely stretched so that the teat cup 6 rests on the carrier 32 in a proper manner. When the teat cup 6 rests on the carrier 32, the switch 60 supplies a signal to the computer. When, after a fixed period of time after the cylinder 55 has been activated, no signal is supplied by the switch 60, the cylinder 55 is activated again and, when again no signal is supplied by the switch 60, the computer will give an error message which, by means of e.g. a radiophone, is passed on to an operating person.

Each of the carriers 32 is provided near its end with a conical seat 62 corresponding to the conical bottom side 57 of the teat cup 6. Thereby the conical seat 62 is disposed in the carrier 32 in such a way that, when the lower end of the carrier 32 is located in a horizontal plane, a teat cup 6 put on the conical seat 62 takes a somewhat forwardly inclined position. The angle at which the teat cup 6 is positioned relative to the vertical line lies approximately between 3° and 10° and is preferably 5°. When the teat cup 6 is pivoted about the shaft 36 by means of the cylinder 40 in order to be connected to the teat of an animal to be milked, said teat cup 6 will take a substantially vertical position during pivoting. In this manner it is possible to connect a teat cup 6 to the teat of an animal to be milked by simply pivoting the unit 32.

For the purpose of verifying whether, by activating the withdrawing member 54, a teat cup 6 is put in the conical seat 62 in a proper manner, there is fitted in the conical seat 62 a sensor 63 recording whether the conical bottom side 57 of the teat cup 6 is correctly put in the conical seat 62. The sensor 63 may thereby be designed as a micro-switch or a conductivity sensor. After the computer has supplied a signal to the withdrawing member 54 to withdraw the teat cup 6 onto the carrier, the computer verifies whether, after a pre-fixed period of time, there is supplied a signal by the sensor 63. When no signal is supplied, it is possible, as described above, to draw the attention of the operating person thereto by means of the computer.

On the outer casing 64 of the teat cup 6 there is provided a sensor 65, supplying a signal to the (non-shown) computer concerning the angle at which the teat cup 6 is positioned relative to the vertical line. The sensor 65 may thereby be designed as a clinometer or a simple mercury switch. When the teat cup 6 has been pivoted over a pre-set angle, of e.g. 45°, relative to the vertical line, the vacuum in the teat cup is automatically removed by the computer and the withdrawing member 54 is automatically activated in order to withdraw the teat cup 6 onto the conical seat 62, so that the teat cup 6 is prevented from falling onto the floor and becoming dirty. When the teat cup 6, after activating the withdrawing member 54, does not return to the seat 62 after a pre-fixed period of time, which is ascertained by the sensor 60 and/or the sensor 63, this is pointed out to the operating person in the above-described manner. In an implement of the above-mentioned type, the aforementioned sensors 60, 63 and 65 can be applied individually as well as in combination with each other.

## Claims

1. A construction including an implement for milking animals, provided with one or more milking robots (5), teat cups (6) and one or more milk boxes (1) each having a horizontal floor (17), each teat cup (6) being disposed on a carrier (32) of a milking robot arm in an inoperative position, while, when a relevant teat cup (6) is connected to a teat of an animal to be milked, the teat cup (6) is brought in a substantially vertical position by means of the carrier (32) in order to bring the teat cups back to their inoperative position the implement being provided with withdrawing members (54), by means of which respective teat cups (6) can be drawn towards the carrier (32), **characterized in that** in the inoperative position each teat cup (6) forms an angle with a vertical line, extending perpendicular on the horizontal floor (17), and **in that** the carrier comprises four units (34) each carrying a teat cup (6), and the units (34) are provided with means (40), by means of which the units (34) are pivotable independently of each other about a horizontal pivot shaft (36).

2. A construction as claimed in claim 1, **characterized in that** the carrier (32) comprises a conical seat (62), while the bottom side of a teat cup (6) is also conical, such that the upper side of the conical part (57) of the teat cup (6) has a larger diameter than that of the teat cup (6) near the bottom side thereof.

3. A construction as claimed in claim 1, **characterized in that** the units (34) comprise a boxlike housing (35), in which a milk tube (43) for the discharge of milk, together with a pulsation tube (44) for the pulsation of the underpressure, is disposed so as to be protected therein.

4. A construction as claimed in claim 3, **characterized in that** the milk tubes and pulsation tubes (43, 44) are arranged in an approximately circular loop in the boxlike housings (35) so as to be protected therein.

5. A construction as claimed in claim 3 or 4, **characterized in that** the milk tubes and pulsation tubes (43, 44) extend from a teat cup (6) over a first part (45) in an approximately vertical plane and are juxtaposed over a second part (46).

6. A construction as claimed in claim 5, **characterized in that** the second part (46) relates to the loop-shaped part of the tubes (43, 44).

7. A construction as claimed in any one of claims 4-6 through 8, **characterized in that** the first part (45) of the tubes (43, 44) is made of a relatively rigid material, and the second part (46) of the tubes (43, 44) is made of a relatively flexible material.

8. A construction as claimed in any one of claims 5-7 through 9, **characterized in that** the first and second part (45, 46) of the tubes (43, 44) are interconnected by means of a coupling block (47).

9. A construction as claimed in claim 8, **characterized in that** the tube connections (48) are superposed at one side of the coupling block (47) and are juxtaposed at the other side thereof.

10. A construction as claimed in any one of claims 3-9 through 11, **characterized in that** the jackets of the milk tubes and pulsation tubes (43, 44) are fixed to each other.

11. A construction as claimed in claim 1, **characterized in that** the withdrawing member (54) includes a flexible element (56), such as a cord, connected with one end with a teat cup (6) and with the other end with a withdrawing element (55), such as a cylinder.

12. A construction as claimed in any one of the preceding claims 1 through 11, **characterized in that** the construction includes a collecting member (10) for collecting dung, in which collecting member there are integrated means for pushing an animal's tail aside.

13. A construction as claimed in claim 12, **characterized in that** the collecting member (10) comprises a gutterlike housing (11) pivotable in the longitudinal direction of the milk box.

14. A construction as claimed in claim 13, **characterized in that** the collecting member (10) is pivotable transversely to the longitudinal direction of the milk box (1).

15. A construction as claimed in any one of claims 12-14, **characterized in that** the collecting member (10) is arranged substantially vertically.

16. A construction as claimed in any one of claims 13-15, **characterized in that** the gutterlike housing (11) comprises a bottom (25) extending obliquely downwards from the cow.

17. A construction as claimed in any one of claims 13-16, **characterized in that** the gutterlike housing (11) debouches over a dung discharge gutter (27).

18. A construction as claimed in any one of claims 13-17, **characterized in that** the gutterlike housing (11) of the collecting member (10), seen in rear view, has the shape of an approximately rightangled triangle.

19. A construction as claimed in claim 18, **characterized in that** a first side (29) of the gutterlike housing (11), seen in rear view, comprises a plate-shaped side wall including an angle of approximately 140° with the horizontal line.

20. A construction as claimed in claim 19, **characterized in that** the gutterlike housing (11) comprises a further side (30) including an angle of approximately 90° with the first side (29).

21. A construction as claimed in claim 20, **characterized in that** the plate-shaped side wall of the further side (30) comprises, near its upper end, a bent part (31) including an angle of approximately 30° with the other plate-shaped part of said side.

22. A construction as claimed in any one of claims 12-21, **characterized in that** the collecting member (10) comprises a cow tracking device, by means of which the milking robot (5) can be post-controlled when the animal moves in the longitudinal direction of the milk box (1).

## Patentansprüche

1. Anlage mit einer Vorrichtung zum Melken von Tieren, die mit einem oder mehreren Melkrobotern (5), Zitzenbechern (6) und einer oder mehreren, jeweils einen horizontalen Boden (17) aufweisenden Melkboxen (1) versehen ist, wobei jeder Zitzenbecher (6) in einer Ruhelage an einem Träger (32) eines Melkroboterarmes angebracht ist, wobei beim Anschließen eines entsprechenden Zitzenbechers (6) an eine Zitze eines zu melkenden Tieres der Zitzenbecher (6) mit Hilfe des Trägers (32) in eine im wesentlichen vertikale Position gebracht wird, um die Zitzenbecher in ihre Ruhelage zurück zu bringen, wobei die Vorrichtung mit Rückziehgliedem (54) versehen ist, mittels derer die betreffenden Zitzenbecher (6) gegen den Träger (32) gezogen werden können,
**dadurch gekennzeichnet, daß** in der Ruhelage jeder Zitzenbecher (6) in einem Winkel zu einer senkrecht auf dem horizontalen Boden (17) stehenden Vertikalen angeordnet ist, und daß der Träger vier jeweils einen Zitzenbecher (6) tragende Einheiten (34) umfaßt und die Einheiten (34) mit Vorrichtungen (40) versehen sind, mittels derer die Einheiten (34) unabhängig voneinander um eine horizontale Schwenkachse (36) schwenkbar sind

2. Anlage nach Anspruch 1,
**dadurch gekennzeichnet, daß** der Träger (32) einen konischen Sitz (62) umfaßt, wobei die Unterseite eines Zitzenbechers (6) ebenfalls konisch ausgebildet ist, derart, daß das obere Ende des konischen Teiles (57) des Zitzenbechers (6) einen größeren Durchmesser als der konische Teil des Zitzenbechers (6) nahe seinem unteren Ende aufweist.

3. Anlage nach Anspruch 1,
**dadurch gekennzeichnet, daß** die Einheiten (34) ein kastenförmiges Gehäuse (35) umfassen, in dem eine Milchleitung (43) zum Ableiten von Milch zusammen mit einer Pulsierleitung (44) zum Pulsieren des Unterdruckes derart angeordnet sind, daß sie darin geschützt sind.

4. Anlage nach Anspruch 3,
**dadurch gekennzeichnet, daß** die Milchleitungen und die Pulsierleitungen (43, 44) in einer annähernd kreisförmigen Schlaufe in den kastenförmigen Gehäusen (35) derart angeordnet sind, daß sie darin geschützt sind.

5. Anlage nach Anspruch 3 oder 4,
**dadurch gekennzeichnet, daß** sich die Milchleitungen und die Pulsierleitungen (43, 44) von einem Zitzenbecher (6) über einen ersten Teil (45) in einer annähernd vertikalen Ebene erstrecken und über einen zweiten Teil (46) nebeneinanderliegen.

6. Anlage nach Anspruch 5,
**dadurch gekennzeichnet, daß** der zweite Teil (46) den schlaufenförmigen Teil der Leitungen (43, 44) betrifft.

7. Anlage nach einem der Ansprüche 4 bis 6,
**dadurch gekennzeichnet, daß** der erste Teil (45) der Leitungen (43, 44) aus einem relativ steifen Material und der zweite Teil (46) der Leitungen (43, 44) aus einem relativ flexiblen Material hergestellt ist.

8. Anlage nach einem der Ansprüche 5 bis 7,
**dadurch gekennzeichnet, daß** der erste und der zweite Teil (45, 46) der Leitungen (43, 44) durch ein Anschlußstück (47) miteinander verbunden sind.

9. Anlage nach Anspruch 8,
**dadurch gekennzeichnet, daß** die Leitungsanschlüsse (48) auf einer Seite des Anschlußstückes (47) übereinander und auf dessen anderer Seite nebeneinander angeordnet sind.

10. Anlage nach einem der Ansprüche 3 bis 9,
**dadurch gekennzeichnet, daß** die Außenmäntel der Milchleitungen und der Pulsierleitungen (43, 44) miteinander verbunden sind.

11. Anlage nach Anspruch 1,
**dadurch gekennzeichnet, daß** das Rückziehglied (54) ein flexibles Element (56), wie z. B. eine Schnur, enthält, die an einem Ende mit einem Zitzenbecher (6) und am anderen Ende mit einem Rückziehelement (55), wie z. B. einem Zylinder, verbunden ist.

12. Anlage nach einem der vorhergehenden Ansprüche 1 bis 11,
**dadurch gekennzeichnet, daß** die Anlage ein Aufnahmeglied (10) zum Aufnehmen von Dung enthält, wobei in dem Aufnahmeglied eine Vorrichtung zum Beiseiteschieben des Schwanzes eines Tieres integriert ist.

13. Anlage nach Anspruch 12,
**dadurch gekennzeichnet, daß** das Aufnahmeglied (10) ein rinnenartiges Gehäuse (11) umfaßt, das in Längsrichtung der Melkbox schwenkbar ist.

14. Anlage nach Anspruch 13,
**dadurch gekennzeichnet, daß** das Aufnahmeglied (10) quer zur Längsrichtung der Melkbox (1) schwenkbar ist.

15. Anlage nach einem der Ansprüche 12 bis 14,
**dadurch gekennzeichnet, daß** das Aufnahmeglied (10) im wesentlichen vertikal angeordnet ist.

16. Anlage nach einem der Ansprüche 13 bis 15,
**dadurch gekennzeichnet, daß** das rinnenartige Gehäuse (11) einen Boden (25) umfaßt, der sich von der Kuh schräg nach unten erstreckt.

17. Anlage nach einem der Ansprüche 13 bis 16,
**dadurch gekennzeichnet, daß** das rinnenartige Gehäuse (11) über einer Dungentsorgungsrinne (27) mündet.

18. Anlage nach einem der Ansprüche 13 bis 17,
**dadurch gekennzeichnet, daß** das rinnenartige Gehäuse (11) des Aufnahmegliedes (10) in Rückansicht die Form eines annähernd rechtwinkligen Dreieckes hat.

19. Anlage nach Anspruch 18,
**dadurch gekennzeichnet, daß** eine erste Seite (29) des rinnenartigen Gehäuses (11) in Rückansicht eine plattenförmige Seitenwand umfaßt, die mit der Horizontalen einen Winkel von etwa 140° bildet.

20. Anlage nach Anspruch 19,
**dadurch gekennzeichnet, daß** das rinnenartige Gehäuse (11) eine weitere Seite (30) umfaßt, die mit der ersten Seite (29) einen Winkel von etwa 90° bildet.

21. Anlage nach Anspruch 20,
**dadurch gekennzeichnet, daß** die plattenförmige Seitenwand der weiteren Seite (30) nahe ihrem oberen Ende einen gebogenen Teil (31) umfaßt, der mit dem anderen plattenförmigen Teil der Seite einen Winkel von etwa 30° bildet.

22. Anlage nach einem der Ansprüche 12 bis 21,
**dadurch gekennzeichnet, daß** das Aufnahmeglied (10) eine Kuhfolgevorrichtung umfaßt, mittels der der Melkroboter (5) nachgeführt werden kann, wenn sich das Tier in Längsrichtung der Melkbox (1) bewegt.

## Revendications

1. Construction comprenant un dispositif de traite d'animaux, doté d'un ou plusieurs robots de traite (5), de gobelets trayeurs (6) et d'un ou plusieurs box de traite (1) ayant chacun un plancher horizontal (17), chaque gobelet trayeur (6) étant disposé sur un support (32) d'un bras de robot de traite dans une position inactive, alors que, lorsqu'un gobelet trayeur donné (6) est raccordé à un trayon d'un animal à traire, le gobelet trayeur (6) est amené dans une position sensiblement verticale au moyen du support (32), afin de ramener les gobelets trayeurs à leur position inactive, le dispositif étant doté d'éléments de retrait (54), au moyen desquels les gobelets trayeurs (6) respectifs peuvent être tirés vers le support (32), **caractérisée en ce que**, dans la position inactive, chaque gobelet trayeur (6) forme un angle avec une ligne verticale, s'étendant perpendiculairement sur le plancher horizontal (17), et **en ce que** le support comprend quatre unités (34) portant chacune un gobelet trayeur (6), et les unités (34) sont dotées de moyens (40) au moyen desquels les unités (14) peuvent pivoter indépendamment les unes des autres autour d'un axe de pivot horizontal (36).

2. Construction selon la revendication 1, **caractérisée en ce que** le support (32) comprend un siège conique (62), alors que le côté inférieur d'un gobelet trayeur (6) est également conique, de telle sorte que le côté supérieur de la partie conique (57) du gobelet trayeur (6) a un diamètre plus grand que celui du gobelet trayeur (6) près de son côté inférieur.

3. Construction selon la revendication 1, **caractérisée en ce que** les unités (34) comprennent un logement de type boîte (35), dans lequel un tube à lait (43) pour la fourniture de lait, ainsi qu'un tube de pulsation (44) pour la pulsation de la sous-pression, sont disposés de sorte à y être protégés.

4. Construction selon la revendication 3, **caractérisée en ce que** les tubes à lait et les tubes de pulsation (43, 44) sont agencés selon une boucle approximativement circulaire dans les logements de type boîte (35) de sorte à y être protégés.

5. Construction selon la revendication 3 ou 4, **caractérisée en ce que** les tubes à lait et les tubes de pulsation (43, 44) s'étendent depuis un gobelet-trayeur (6) sur une première partie (45) dans un plan approximativement vertical et sont juxtaposés sur une deuxième partie (46).

6. Construction selon la revendication 3, **caractérisée en ce que** la deuxième partie (46) est liée à la partie en forme de boucle des tubes (43, 44).

7. Construction selon l'une quelconque des revendications 4 à 6, **caractérisée en ce que** la première partie (45) des tubes (43, 44) est composée d'un matériau relativement rigide et la deuxième partie (46) des tubes (43, 44) est composée d'un matériau relativement flexible.

8. Construction selon l'une quelconque des revendications 5 à 7, **caractérisée en ce que** les première et deuxième parties (45, 46) des tubes (43, 44) sont raccordées entre elles au moyen d'un bloc d'accouplement (47).

9. Construction selon la revendication 8, **caractérisée en ce que** les raccordements de tubes (48) sont superposés sur un côté du bloc d'accouplement (47) et sont juxtaposés sur l'autre côté de celui-ci.

10. Construction selon l'une quelconque des revendications 3 à 9, **caractérisée en ce que** les enveloppes des tubes à lait et des tubes de pulsation (43, 44) sont fixées les unes aux autres.

11. Construction selon la revendication 1, **caractérisée en ce que** l'élément de retrait (54) comprend un élément flexible (56), tel qu'un cordon, raccordé à une extrémité à un gobelet trayeur (6) et à l'autre extrémité à un élément de retrait (55), tel qu'un cylindre.

12. Construction selon l'une quelconque des revendications 1 à 11, **caractérisée en ce que** la construction comprend un élément de collecte (10) pour collecter la bouse, l'élément de collecte comprenant des moyens intégrés pour pousser sur le côté la queue d'un animal.

13. Construction selon la revendication 12, **caractérisée en ce que** l'élément de collecte (10) comprend un logement de type gouttière (11) pouvant pivoter dans la direction longitudinale du box de traite.

14. Construction selon la revendication 13, **caractérisée en ce que** l'élément de collecte (10) peut pivoter transversalement à la direction longitudinale du box de traite (1).

15. Construction selon l'une quelconque des revendications 12 à 14, **caractérisée en ce que** l'élément de collecte (10) est agencé sensiblement verticalement.

16. Construction selon l'une quelconque des revendications 13 à 15, **caractérisée en ce que** le logement de type gouttière (11) comprend une partie inférieure (25) s'étendant obliquement vers le bas à partir de la vache.

17. Construction selon l'une quelconque des revendications 13 à 16, **caractérisée en ce que** le logement de type gouttière (11) débouche sur une rigole de sortie de bouse (27).

18. Construction selon l'une quelconque des revendications 13 à 17, **caractérisée en ce que** le logement de type gouttière (11) de l'élément de collecte (10), vu de l'arrière, a la forme d'un triangle qui est approximativement rectangle.

19. Construction selon la revendication 18, **caractérisée en ce qu'**un premier côté (29) du logement de type gouttière (11), vu de l'arrière, comprend une paroi latérale en forme de plaque formant un angle d'approximativement 140° avec la ligne horizontale.

20. Construction selon la revendication 19, **caractérisée en ce que** le logement de type gouttière (11) comprend un autre côté (30) formant un angle d'approximativement 90° avec le premier côté (29).

21. Construction selon la revendication 20, **caractérisée en ce que** la paroi latérale en forme de plaque de l'autre côté (30) comprend, près de son extrémité supérieure, une partie courbée (31) formant un angle d'approximativement 30° avec l'autre partie en forme de plaque dudit côté.

22. Construction selon l'une quelconque des revendications 12 à 21, **caractérisée en ce que** l'élément de collecte (10) comprend un dispositif de suivi des vaches, au moyen duquel le robot de traite (5) peut être contrôlé a posteriori lorsque l'animal s'est déplacé dans la direction longitudinale du box de traite (1).
